# EUROPÄISCHE PATENTANMELDUNG

(11) **EP 0 989 165 A1**
(43) Veröffentlichungstag der Anmeldung: **29.03.2000**
(21) Anmeldenummer: 99117094.5
(22) Anmeldetag: 31.08.1999
(51) Int. Cl.: C09C 1/00

(54) **Verwendung von Zirkonsilikatfarbkörpern zur Einfärbung keramischer Massen**

(30) Priorität: 04.09.1998 DE 19840371
(71) Anmelder: BASF Pigment GmbH, 74354 Besigheim (DE)
(72) Erfinder: Fellger, Joachim, 71711 Steinheim (DE); Merk, Helmuth, 70378 Stuttgart (DE); Pelz, Otmar, 74354 Besigheim (DE); Striegel, Ulrike, 71642 Ludwigsburg (DE)
(74) Vertreter: Karg, Jochen

(57) **Zusammenfassung**

Verwendung von eisenoxidhaltigen Zirkonsilikatfarbkörpern, die einer Behandlung mit einer Säure unterzogen worden sind, zur Einfärbung keramischer Massen.

## Beschreibung

Die vorliegende Erfindung betrifft die Verwendung von eisenoxidhaltigen Zirkonsilikatfarbkörpern, die einer Behandlung mit einer Säure unterzogen worden sind, zur Einfärbung keramischer Massen.

Außerdem betrifft die Erfindung keramische Massen, welche mit diesen Zirkonsilikatfarbkörpern eingefärbt sind.

Zirkonsilikatfarbkörper, die Metalloxide als farbgebende Komponenten enthalten, sind schon seit langem bekannt (vgl. Ullmanns Encyclopädie der Industriellen Chemie, 4. Auflage, Band 14, Seite 3 bis 4 (1977)). So werden durch Einbau von Eisenoxid rote Farbkörper erhalten, die erstmalig in der US-A-3 166 430 beschrieben werden. Die eisenoxidhaltigen Farbkörper werden bislang nur in Glasuren eingesetzt, wo sie intensive Rottöne ergeben. Bei der Anwendung in keramischen Massen werden lediglich schmutzigbraune Farbtöne erhalten. Als Ersatzprodukte werden daher manganhaltige Aluminiumoxide und chromhaltige Yttriumaluminiumoxide eingesetzt, mit denen jedoch nur schwache Rosafärbungen zu erzielen sind. Massefärbungen in intensivem Rot sind bislang nicht bekannt (vgl. Ullmann's Encyclopedia of Industrial Chemistry, 5th Edition, Vol. A5, Seite 554, rechte Spalte, 3. Absatz (1986)).

Der Erfindung lag daher die Aufgabe zugrunde, diesem Mangel abzuhelfen.

Demgemäß wurde die Verwendung von eisenoxidhaltigen Zirkonsilikatfarbkörpern, die einer Behandlung mit einer Säure unterzogen worden sind, zur Einfärbung keramischer Massen gefunden.

Außerdem wurden keramische Massen gefunden, welche durch diese Zirkonsilikatfarbkörper eingefärbt sind.

Die erfindungsgemäß verwendeten eisenoxidhaltigen Zirkonsilikatfarbkörper (im folgenden "Eisenrosafarbkörper" genannt) sind einer Behandlung mit einer Säure unterzogen worden.

Die Behandlung von Eisenrosafarbkörpern mit einer Säure ist aus der US-A-3 166 430 bekannt. Durch diese Behandlung kann nichtfixiertes Eisenoxid aus dem Farbkörper entfernt werden.

Als Ausgangsprodukt für die Säurebehandlung eignen sich alle nach den bekannten und z.B. in der US-A-3 166 430 beschriebenen Verfahren hergestellten Eisenrosafarbkörper. Vorzugsweise werden die Eisenrosafarbkörper dabei durch Calcinieren einer Mischung von Zirkoniumdioxid, Siliciumdioxid, Eisen(III)oxid sowie einem Alkalimetallfluorid (z.B. Lithiumfluorid, Natriumfluorid, Kaliumfluorid, Lithiumhexafluorosilikat, Natriumhexafluorosilikat, Kaliumhexafluorosilikat) bei etwa 900 bis 1150°C (ca. 1 bis 5 h), Mahlen des abgekühlten Calcinierungsprodukts, Waschen und Trocknen erhalten. Es ist jedoch auch möglich, anstelle von Eisenoxid ein wasserlösliches Eisen(III)salz einzusetzen und eine wäßrige Mischung der genannten Komponenten herzustellen, die dann der Calcinierung zugeführt wird.

Für die Säurebehandlung sind prinzipiell alle bei Raumtemperatur flüssigen anorganischen oder organischen Säuren geeignet, in denen Eisenoxid löslich ist. Bevorzugt sind anorganische Säuren. Beispiele für geeignete Säuren sind Schwefelsäure und insbesondere Salzsäure.

Selbstverständlich ist die Konzentration der Säure so zu wählen, daß die Säure auch in der Lage ist, Eisenoxid zu lösen. Z.B. ist die vorzugsweise eingesetzte Salzsäure bevorzugt 5 bis 37 gew.-%ig, besonders bevorzugt 20 bis 30 gew.-%ig.

Das Mengenverhältnis Eisenrosafarbkörper/Säure ist an sich nicht kritisch, jedoch sollte zweckmäßigerweise mindestens so viel Säure eingesetzt werden, daß die Mischung noch rührbar ist. Eine verfahrensbedingte Obergrenze für die Säuremenge gibt es im Prinzip nicht, zu große Säureüberschüsse sind jedoch aus Gründen der Wirtschaftlichkeit nicht empfehlenswert.

Die Behandlung mit der Säure kann unter Normaldruck bei einer Temperatur von Raumtemperatur bis 100°C erfolgen, wobei Temperaturen von 50°C bis zum Siedepunkt bevorzugt sind. Wenn höhere Behandlungstemperaturen gewünscht sind, kann man selbstverständlich auch in einer geschlossenen Apparatur unter dem sich einstellenden Eigendruck arbeiten.

Zweckmäßigerweise geht man bei der Säurebehandlung so vor, daß man Eisenrosafarbkörper und Säure miteinander mischt, die Mischung unter Rühren auf die gewünschte Temperatur erhitzt und in der Regel 1 bis 3 h bei dieser Temperatur hält.

Eine bevorzugte Vorgehensweise bei der weiteren Aufarbeitung besteht darin, daß man Heizung und Rührer abstellt, die Mischung etwa 1 bis 5 h abkühlen läßt und dann die überstehende, das gebildete Eisensalz enthaltende Lösung abtrennt und die verbleibende Suspension dann in ein Waschgefäß gibt und mit Wasser vorzugsweise so lange wäscht, bis ein pH-Wert ≥ 6 erreicht ist. Alternativ kann man die Säure durch Zugabe einer Base, z.B. von Natronlauge oder einer Natriumcarbonatlösung, teilweise neutralisieren (d.h. einen pH-Wert von ca. 1,5 einstellen) und dann mit Wasser waschen. Die Isolierung des Produkts kann anschließend durch Abfiltrieren und Trocknen erfolgen.

Die säurebehandelten Eisenrosafarbkörper enthalten vorzugsweise 1 bis 6 Gew.-%, vor allem 2 bis 4 Gew.-% Eisen(III)oxid, jeweils bezogen auf das Gewicht des Gesamtfarbkörpers.

Überraschenderweise können keramische Massen mit den säurebehandelten Eisenrosafarbkörpern hervorragend eingefärbt werden. Dabei werden intensive Rosa-Rottöne erhalten.

Keramische Massen sind allgemein bekannt und werden vorwiegend in der Baukeramik verwendet. Ein besonders wichtiges Beispiel für keramische Massen sind Fußbodenplatten, die durchgefärbt werden.

Die Hauptbestandteile der keramischen Massen sind Siliciumdioxid und Aluminiumoxid, die üblicherweise etwa 50 bis 65 Gew.-% bzw. 20 bis 40 Gew.-% der keramischen Masse ausmachen. Weiterhin sind in der Regel Eisen(III)oxid (etwa 0,5 bis 4 Gew.-%), Titandioxid (bis zu etwa 1,8 Gew.-%), Calciumoxid (bis zu etwa 1,5 Gew.-%), Magnesiumoxid (bis zu etwa 1,5 Gew.-%) und Natrium- und/oder Kaliumoxid (zusammen etwa 1 bis 3,5 Gew.-%) enthalten.

Bei der Einfärbung von Fußbodenplatten mit den säurebehandelten Eisenrosafarbkörpern kann man beispielsweise wie folgt vorgehen: Der Eisenrosafarbkörper wird der keramischen Masse in der Regel in einer Menge von 1 bis 10 Gew.-% zugegeben, was vorzugsweise durch Dispergieren in Wasser geschieht. Das Gemisch wird dann üblicherweise getrocknet, anschließend zu Platten verpreßt und bei etwa 1180 bis 1200°C gebrannt, wobei in der Regel mit einer Geschwindigkeit von ca. 30°C/min auf die gewünschte Endtemperatur erhitzt wird, diese dann etwa 5 bis 10 min gehalten wird und dann in ca. 20 bis 40 min wieder auf Raumtemperatur abgekühlt wird. Der Brennprozeß kann auch in einem Durchlauf/Rollenofen bei Temperaturen von etwa 1200 bis 1270°C und mit einer Durchlaufzeit von 50 bis 90 min (kalt/kalt) durchgeführt werden.

### Beispiel 1

Eine Mischung von 500 g eines im Handel erhältlichem Eisenrosafarbkörpers (Sicocer® Eisenrosa F 2350; enthaltend 50 Gew.-% Zirkondioxid, 24 Gew.-% Siliciumdioxid und 23 Gew.-% Eisen(III)-oxid) und 1,25 l einer 30 gew.-%igen Salzsäure wurde unter Rühren auf 80°C erhitzt. Nach zweistündigem Rühren bei dieser Temperatur wurden Heizung und Rührer ausgeschaltet. Nach 1 h wurde die überstehende klare Eisen(III)chlorid enthaltende Lösung abdekantiert. Die verbleibende Suspension wurde erneut aufgerührt und anschließend in ein zur Hälfte mit Leitungswasser gefülltes 51-Waschgefäß überführt. Die Suspension wurde mit Leitungswasser gewaschen, bis ein pH-Wert von 6 erreicht war. Dann wurde der Eisenrosafarbkörper abfiltriert und bei 130°C getrocknet.

Der auf diese Weise erhaltene Eisenrosafarbkörper enthielt 64 Gew.-% Zirkondioxid, 31 Gew.-% Siliciumdioxid und 4 Gew.-% Eisen(III)oxid.

1 g des säurebehandelten Produkts wurde zusammen mit 50 g einer handelsüblichen keramischen Masse in 30 ml Wasser dispergiert. Die Dispersion wurde dann bei 140°C getrocknet. Mit einer Hydraulikpresse wurden aus dem trockenen Pulver bei einem Preßdruck von 30 t Preßlinge (Probekörper) hergestellt, die in einem Schnellbrandofen in 40 min auf 1200°C aufgeheizt und 5 min bei dieser Temperatur eingebrannt wurden.

Die eingebrannten, abgekühlten Probekörper wurden anschließend mit einem Farbmeßgerät (Colorflash, Fa. Optronik) nach Hunter-LAB vermessen.

Zum Vergleich (V) wurden Preßlinge hergestellt, die mit nichtbehandeltem Sicocer Eisenrosa F2350 eingefärbt wurden.

Die erhaltenen Farbwerte sind in der folgenden Tabelle zusammengestellt. Dabei entspricht L der Helligkeit, a* dem Rot- bzw. Grünanteil und b* dem Blau- bzw. Gelbanteil.

**Tabelle**

| Beispiel | L | a* | b* |
|---|---|---|---|
| 1 | 45,8 | 20,0 | 14,1 |
| V | 39,4 | 12,8 | 9,7 |

## Patentansprüche

1. Verwendung von eisenoxidhaltigen Zirkonsilikatfarbkörpern, die einer Behandlung mit einer Säure unterzogen worden sind, zur Einfärbung keramischer Massen.

2. Keramische Massen, eingefärbt durch Zirkonsilikatfarbkörper gemäß Anspruch 1.
